# EUROPEAN PATENT APPLICATION

(11) **EP 4 674 732 A1**
(43) Date of publication of application: **07.01.2026**
(21) Application number: 24186892.6
(22) Date of filing: 05.07.2024
(51) Int. Cl.: B62D 15/02

(54) **METHOD FOR MOVING A STEERING DEVICE OF A VEHICLE**

(71) Applicant: Volvo Car Corporation, 405 31 Göteborg (SE)
(72) Inventor: HÄLL, Carl-Johan, 40531 Göteborg (SE); HANSSON, Anders, 40531 Göteborg (SE)
(74) Representative: Maiwald GmbH

(57) **Abstract**

The disclosure relates to a method (10) for moving a steering device (2) of a vehicle (1), the vehicle (1) comprising a steer-by-wire system (7) for steering the vehicle (1), and the method (10) comprising:
- obtaining first data indicative of an autonomous driving operation to be carried out by the vehicle (1); and
- obtaining second data indicative of a movement pattern (MP) for moving the steering device (2) based on the first data.

## Description

### TECHNICAL FIELD

The present disclosure relates to a method for moving a steering device of a vehicle, a computer program product, a data processing system, and a vehicle.

### BACKGROUND

In autonomously driven vehicles without a steer-by-wire system there is a mechanical link in the form of a steering column between the steering wheel and the steering gear. Due to the mechanical link, the steering wheel is moved corresponding to the steering of the vehicle when it is being autonomously driven.

In vehicles with steer-by-wire systems, however, the steering wheel is not moved during autonomous driving since there is no mechanical link between the steering wheel and the steering gear. Hence, no indication of autonomous driving actions, e.g., turns, is given to the occupants of the vehicle, specifically not to the occupant at the driver position of the vehicle when the vehicle is in autonomous driving mode. The occupants will still be subjected to the forces caused by the vehicle movement, e.g., when the vehicle turns, and this may cause discomfort due to the lack of indication preparing the occupant for the vehicle movement or guiding the occupant during the vehicle movement.

### SUMMARY

The problem is at least partially solved or alleviated by the subject matter of the independent claims of the present disclosure, wherein further examples are incorporated in the dependent claims.

According to a first aspect, there is provided a method for moving a steering device of a vehicle, the vehicle comprising a steer-by-wire system for steering the vehicle, and the method comprising:
- obtaining first data indicative of an autonomous driving operation, in particular autonomous steering operation, to be carried out by the vehicle; and
- obtaining second data indicative of a movement pattern for moving the steering device based on the first data.

Accordingly, the method provides for a moving steering device in a vehicle with a steer-by-wire system, wherein a movement pattern of the steering device is indicative of the autonomous driving operation carried out by the vehicle. Hence, despite not having a mechanical link, e.g., in the form of a steering column, between the steering device and the steering gear, the steering device may still be indicative of the driving operation, in particular steering operation, that is being carried out or which is to be carried out, e.g., a left turn, a right turn, a U-turn, or similar. Thereby, the occupants, in particular the occupant at the driver position, may be informed about the autonomous driving operation, in particular autonomous steering operation, during autonomous driving, in particular autonomous steering, of the vehicle, e.g., whether a strong or small turn or into which direction a turn will be or is being performed. The informing of the occupants or, in other words, indication provided to them is through the movement pattern of the steering device. The movement pattern may be intuitive, e.g., a right movement for a right turn or a left movement for a left turn. Also, the movement pattern may be a quick and/or large movement for a fast or sharp turn and a slow and/or small movement for a slow or small turn. In other words, the movement pattern may be intuitive not only for the direction of a turn, but also for the extent or severity of a turn or steering. Hence, the occupants may better prepare for and/or follow the vehicle movement, effectively increasing their comfort in an autonomous driving mode of the vehicle.

The steering device may be a steering wheel, a yoke, a joystick, or any other control device for steering the vehicle. The steering device may comprise or be linked to one or more actuators, e.g., in the form of one or more electric motors, for moving the steering device based on the second data or, in other words, according to the movement pattern. The steering device may be coupled to the steer-by-wire system. The vehicle may accordingly be manually controlled by the driver through the steering device, which is in particular connected to one or more electronic control units, which may use the input to control steering actuators that turn the wheels side-to-side, steering the vehicle. The steer-by-wire system may allow steering of some or all of the vehicle's wheels without a steering column that turns the direction of those wheels mechanically. The vehicle may be a road vehicle, in particular a car or a truck, but other types of vehicles are also possible.

The vehicle may be configured for partial or fully autonomous driving. For this purpose, the vehicle may comprise a data processing system and one or more sensors for observing the surrounding of the vehicle. The data processing system may, based on the sensor data, determine appropriate driving operations, in particular steering operations. Generally, the vehicle may be equipped with any partially or fully autonomous level for controlling, in particular steering, the vehicle. This means that the autonomous driving operation indicated by the first data may be an unsupervised and/or fully autonomous driving operation, in particular steering operation. Alternatively, however, the autonomous driving operation indicated by the first data may be a supervised and/or partially autonomous driving operation, in particular steering operation, including driver assist functions such as lane switching assistant and without fully autonomous driving of the vehicle.

The method of the first aspect may in particular be a computer implemented method. This means that at least one, multiple or all of the steps of the method may be carried out by one or more computers or computing units. Different steps may be carried out by the same or by different computers. A computer is herein understood as a data processing apparatus, which can carry out the steps as defined by the method. The one or more computers may be configured as or provided inside of one more control units of the vehicle. In particular, the one or more computers may be of a data processing system of the vehicle, which may comprise all of the computers of the vehicle or at least the ones relevant for the method. The control units or the data processing system may also be configured to carry out other control operations than described by the method according to the first aspect, e.g., autonomous driving control operations.

The autonomous driving operation to be carried out by the vehicle may be a planned and/or predicted autonomous driving operation by an autonomous driving system, which may be configured for partially or fully autonomous driving, as explained above. Hence, the first data may be from an autonomous driving system of the vehicle, which may be provided by or be part of the data processing system of the vehicle. In particular, the herein mentioned data processing system may obtain the first data. In particular, the first data may be determined. For example, the first data may be determined by the autonomous driving system of the vehicle predicting the autonomous driving operation to be carried out by the vehicle.

The movement pattern may be obtained for every instance of the first data or, in other words, the autonomous driving operations. The movement pattern may in particular be configured for autonomously moving the steering device. In particular, the herein mentioned data processing system may obtain the second data. In particular, the second data may be determined. The movement pattern may be obtained or determined individually in each case by the data processing system. Alternatively, or additionally, there may be several pre-stored movement patterns and the one movement pattern most accurately reflecting the autonomous driving operation indicated by the first data may be selected therefrom to obtain the second data.

In an example, the vehicle may comprise a first mode, in which movement of the steering device is being used as input for the steer-by-wire system to steer the vehicle. Further, the vehicle may comprise a second mode for carrying out the autonomous driving operation, wherein the second data is obtained for steering the steering device in the second mode of the vehicle. The first mode may also be referred to as a manual driving mode, where the driver of the vehicle may manually steer the vehicle. The second mode may also be referred to as an autonomous driving mode. In the second mode, movement of the steering device may in particular not be used or forwarded as input for the steer-by-wire system to steer the vehicle. Hence, the autonomous steering of the steering device does not provide input to the steer-by-wire system. Particularly, there may be no correlation between the steering by the steer-by-wire system and the autonomous steering for indicating the autonomous driving operation. Hence, the movement of the steering device may be uncorrelated to the steering of the vehicle, unless the movement pattern is determined such that it correlates to the steering of the vehicle like a vehicle with a mechanical link between the steering device and the steering gear would.

In an example, the method further comprises obtaining third data for autonomously steering the vehicle by the steer-by-wire system during the autonomous driving operation, the third data being based on the first data. In other words, the autonomous movement of the steering device, e.g., steering wheel, may be correlated to a predicted or expected autonomous driving operation. However, the movement of the steering device may be uncorrelated to the steering of the vehicle in the sense that it is not based thereon or linked thereto.

In an example, the movement pattern may be different from a movement action required for moving the steering device to carry out the autonomous driving operation indicated by the first data, in particular when the vehicle would be in the first mode. In other words, the movement pattern may not be the same as it would be in a vehicle with a mechanical steering column or mechanical link between the steering device and the steering gear. Instead, the movement pattern may deviate, e.g., be slower, less intense, or generally have a different movement pattern as explained below, e.g., in the form of a repetitive movement pattern. This allows to use movement patterns to indicate autonomous driving operations which were previously not available with mechanical steering columns. In particular, many different movement patterns may be used to indicate different autonomous driving operations, in particular steering operations, in an intuitive manner and in a less obstructing way, e.g., without rotating a steering wheel very quickly or a lot.

In an example, the method may further comprise executing control data for moving the steering device before and/or during the autonomous driving operation is being carried out by the vehicle. The control data may be based on the second data. In particular, the steering device may be moved according to the movement pattern indicated by the second data. The control data may be or comprise a control instruction for the one or more actuators of the steering device, which is thereby executed to move the steering device according to the movement pattern.

In an example, the movement pattern may comprise one or more movement dimensions being at least one of: a movement angle, a movement direction, a movement position, and a movement speed. In particular, the movement pattern may comprise one or more of the afore-mentioned movement dimensions. By using multiple or all these movement dimensions, it may be possible to intuitively and recognizably reflect different autonomous driving operations, e.g., a left turn, a right turn, a braking, a U-turn, and similar, in the movement pattern.

In an example, the movement pattern may be a repetitive movement of the steering device between at least two movement positions. In other words, a nudging movement of the steering device may be provided by the movement pattern. For example, the movement pattern may be moving the steering device between the at least two or more movement positions. For example, one of these two movement positions may be to the left or to the right of a steering wheel as steering device. Hence, when the movement pattern is a repetitive movement towards and/or on the left or towards and/or on the right, a left or right turn or similar left or right driving operation, e.g., lane switch, may be intuitively indicated to the occupants.

Additionally, or alternatively to a repetitive movement or approach, a static offset approach may be followed, in which the movement pattern is a single movement to a position, in which the steering device may be kept such that a static offset from a typical or nominal position of the steering device is provided. In the example of a steering wheel as steering device, the steering wheel may remain at a constant angle to the left or right, thereby indicating a turn direction, for example.

In an example, the second data may be obtained such that the movement pattern correlates to a type of the autonomous driving operation indicated by the first data. In particular, there may be several movement patterns for different types of the autonomous driving operations. These movement patterns may be intuitive for the types of the autonomous driving operations and/or sufficiently different from one another such that they may be easily recognized and/or remembered. Hence, the occupants may quickly learn them and easily distinguish these from one another to know the autonomous driving operations to be carried out and hence increase their driving comfort. For example, the type of the autonomous driving operation may be any one or more of: a braking operation, an emergency operation, an accelerating operation, an overtaking operation, a lane switch operation, a turn operation, and/ or similar. In particular, the type of the autonomous driving operation may be any two or more of the aforementioned list. While it is possible that the movement pattern is based only on first data indicative of autonomous steering operations, the movement pattern is not necessarily limited towards the movement of a steering device indicating a steering of the vehicle. Instead, also indications of autonomous driving operations may be provided, which are not related to steering, and which were not possible with a mechanical steering column, e.g., for indicating braking or accelerating of the vehicle. In particular, it may be possible that the first data is indicative of autonomous driving operations different from steering operations and thereby indicate autonomous driving operations with a movement pattern which are different from steering operations.

In an example, the type of the autonomous driving operation may be at least one of: a left steering operation and a right steering operation, wherein at least a movement direction of the movement pattern correlates to the left steering operation or the right steering operation. Hence, in the example of steering operations as autonomous driving operations, a left or right movement direction of the movement pattern correlates to either a left or right steering operation performed by the vehicle. This is particularly intuitive and easy to follow by the occupants of the vehicle.

In an example, the second data may be obtained such that the movement pattern correlates to an extent of the autonomous driving operation, in particular autonomous steering operation, indicated by the first data. Generally, an extent or, in other words, severity of the autonomous driving operation may relate to a speed, amount or type of autonomous driving operation, e.g., a speed with which the operation is carried out, an amount of turning angle or radius, or whether a rapid braking or acceleration is performed. For example, the movement pattern may be more intense in one or more of the movement dimensions if the driving operation is a U-turn compared to a turn of the vehicle, or a turn compared to a lane switch as autonomous driving operation, for example. For example, in case of a steering wheel, the movement may be faster and/or with larger movement path or angle, e.g., larger rotation angle, when the autonomous driving operation has a large extent or severity, e.g., a sharp turn compared to a lane switch operation.

In an example, the method may further comprise obtaining fourth data indicative of a driving awareness and/or driving readiness of an occupant of the vehicle, wherein the second data is obtained such that the movement pattern correlates to the fourth data. Hence, the movement pattern may be adapted to the driving awareness and/or readiness of one or more occupants of the vehicle, in particular at least or only to the driver of the vehicle or, in other words, occupant seated at the position of the driver inside the vehicle. For example, in case of an unaware or unready driver, the movement pattern may be more intense compared to an aware or ready driver. The driving awareness may for example be based on gaze of the driver, posture of the driver, adjusted seat or seat settings of the driver and/or signs of nervousness of the driver. The driving readiness may be based on the same factors but differs from the awareness in that it indicates whether an occupant or driver is ready to take over control of the vehicle or not, e.g., by grabbing the steering device, whereas driving awareness indicates whether the occupant or driver is aware of the surroundings of the vehicle and/or driving actions taken by the vehicle. Generally, an artificial intelligence, AI, or machine learning, ML, model or algorithm may be used for obtaining the fourth data or supporting the obtaining of the fourth data. Generally, a pedal pressure of one or more pedals, a driver monitoring based on the above-mentioned parameters such as gaze and posture of the driver, whether the driver has their hands on the steering device or not, and/or data from road wheel actuators may be used as input for such AI or ML model or algorithm. Alternatively, or additional, an AI or ML model or algorithm may be used for learning the movement pattern based on the driver awareness and/or driver readiness. Such model or algorithm may receive the same input as specified above and learn and/or use movement patterns based on whether or how well the occupant, in particular driver, reacts to specific movement patterns. Accordingly, the model or algorithm may optimize the movement patterns for individual occupants or drivers such that they optimally react thereto. Optimally react may mean that an occupant or driver takes note of the autonomous driving operations without being overwhelmed, distracted and/or annoyed by the movement patterns and feels comfortable when being driven in the vehicle.

In an example, the second data may be further based on one or more user settings. In particular, the movement pattern may be based on one or more user settings, e.g., defining the extent and/or application of one or more of the movement dimensions in the movement pattern. Thereby, the user, e.g., occupant or driver of the vehicle, may customize the second data and hence the movement pattern. For example, the user may be defining the extent or severity of the movement pattern and which of several movement patterns to use or not to use. Thereby, the user may ensure that the indications of the autonomous driving operations are sufficiently engaging but not distracting or annoying. Also, the user settings may be configured to allow the user to enable or disable movement patterns for different autonomous driving operations. For example, the different autonomous driving operations may be from a braking operation, an emergency operation, an accelerating operation, an overtaking operation, a lane switch operation, a turn operation, and/or similar, and the one or more user settings may enable or disable movement patterns for any one or more of the aforementioned types of autonomous driving operations.

According to a second aspect, there is provided a computer program product comprising instructions which, when executed by a data processing system, cause the data processing system to carry out the method of any one of the previous claims. The computer program product may be a computer program as such or a product, e.g., computer-readable storage medium, comprising such computer program.

According to a third aspect, there is provided a data processing system comprising means for carrying out the method of the first aspect of this disclosure. The means may for example include the computer program product.

According to a fifth aspect, there is provided a vehicle comprising a steering device, a steer-by-wire system for steering the vehicle, and the data processing system of the third aspect of this disclosure.

It is noted that the above examples may be combined with each other irrespective of the aspect involved. Accordingly, the method may be combined with structural features and, likewise, the computer program product, data processing system and vehicle may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: schematically illustrates a method for moving a steering device of a vehicle and the vehicle; and
- Figure 2: schematically illustrates an exemplary movement pattern for moving the steering device.

### DETAILED DESCRIPTION

The Figures are merely schematic representations and serve only to illustrate examples of the disclosure. Identical or equivalent elements are in principle provided with the same reference signs.

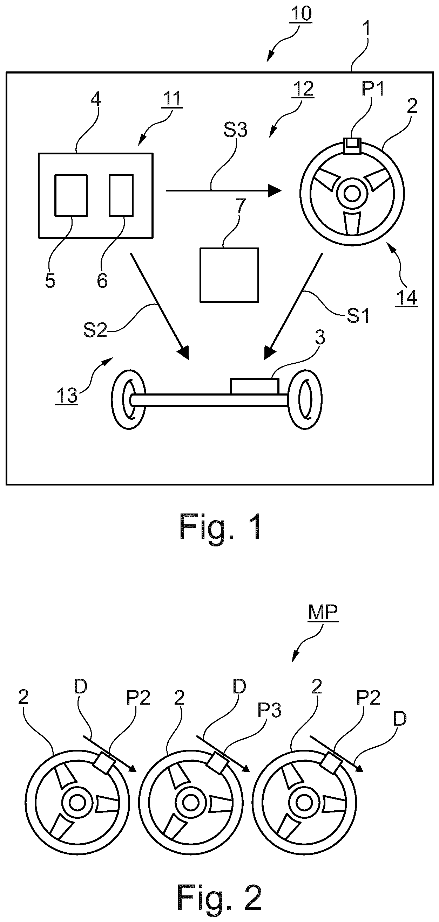

Figure 1 schematically illustrates a vehicle 1 comprising a steering device 2. The steering device 2 is exemplary shown as a steering wheel 2 but could alternatively be implemented as a yoke, joystick, or any other control device for steering the vehicle 1.

Further, the vehicle 1 is shown to comprise steering gear 3, which may include or be connected to vehicle wheels as shown for steering the vehicle 1 during driving.

Moreover, the vehicle 1 comprises a data processing system 4, which may comprise one or more data processing apparatuses. In this example, the data processing system 4 is exemplary shown as a central computer or computing unit for processing or handling several functions, namely one or more autonomous driving functions, in particular autonomous steering functions, and a function of movement of the steering device 2 as described herein. However, alternatively, these different functions may be handled or processed by different data processing apparatuses within the data processing system 4 of the vehicle 1. In this example, the data processing system 4 comprises a processing unit 5, e.g., a CPU or processor, and a computer program product 6, which may be a computer-readable storage medium, on which a computer program is stored. When the computer program is executed by the processing unit 5, the method 10 as schematically illustrated in Fig. 1 may be executed. The method 10 is configured for moving the steering wheel 2 of the vehicle 1.

Moreover, the vehicle 1 comprises a steer-by-wire system 7 for steering the vehicle 1. The steer-by-wire system 7 may be linked to and/or comprise the data processing system 4 or parts thereof, the steering wheel 2 and/or the steering gear 3. The steer-by-wire system 7 has no mechanical link, such as in the form of a steering column, between the steering wheel 2 and the steering gear 3. Instead, the steer-by-wire system 7 may comprise one or more sensors functionally coupled with the steering wheel 2, e.g., in the form of an angle sensor sensing the rotational angle of the steering wheel 2. Further, the steer-by-wire system 7 may comprise or be connected to an actuator receiving the sensor signals from the one or more sensors and/or control data based on the sensor signals for steering the vehicle 1 by using the steering gear 3. The actuator may be part of the steering gear 3, for example. Hence, the steering wheel 2 is mechanically decoupled from the steering gear 3 and the steering is achieved electronically or, in other words, "by wire", through the steer-by-wire system 7.

The vehicle 1 comprises a first mode, in which movement of the steering wheel 2 is used as input for the steer-by-wire system 7 to steer the vehicle 1 by means of the steering gear 3. In other words, in the first mode, an occupant in the form of a driver of the vehicle 1 may move the steering wheel 2 and thereby generate a signal S1, e.g., by the angle sensor, which is then used as input by the steer-by-wire system 7 for controlling the steering gear 3 to steer the vehicle 1 based on the movement of the steering wheel 2, e.g., steer the vehicle wheels to the left when the steering wheel 2 is rotated to the left by one or more actuators, e.g., electric motors of the steering gear 3, processing an instruction from the steer-by-wire system 7 to steer the vehicle 1.

Further, the vehicle 1 comprises a second mode for carrying out an at least partially or fully autonomous driving operation, in particular steering operation. For this purpose, the data processing system 4 may be configured as or comprise an at least partially autonomous driving operation module or unit (not shown). Specifically, such module or unit may be configured for autonomously steering the vehicle 1. In this case, the input of the driver on the steering wheel 2 is not being used as input for the steer-by-wire system 7. Instead, the signal S2 generated by the data processing system 4 is being used for controlling the steering gear 3 to steer the vehicle 1, wherein the signal S2 relates to the autonomous driving operation or steering to be carried out or currently carried out by the vehicle 1.

In the second mode of the vehicle 1, the steering wheel 2 would thus normally not move or, in other words, be silent. However, this may negatively impact the comfort of the occupants of the vehicle 1 because they are not aware of the autonomous driving operations, e.g., sharp turns, but they are still influenced physically by the forces caused thereby.

For this purpose, the method 10 is configured for moving the steering wheel 2 in the second mode similar to the case when a steering column would be used instead of a steer-by-wire system 7.

Specifically, the method 10 may comprise obtaining first data indicative of an autonomous driving operation, in particular steering operation, to be carried out by the vehicle 1 in a step 11 of method 10. Step 11 may be carried out by the data processing system 4 as indicated in Fig. 1.

Further, the method 10 comprises obtaining second data indicative of a movement pattern MP for moving the steering wheel 2 based on the first data in a step 12 of method 10. An exemplary movement pattern MP is schematically illustrated in Fig. 2 and is explained further below. The obtaining of the second data may be carried out by the data processing system 4 and/or the steering wheel 2 or an actuator thereof, for example. For example, a signal S3 may be transmitted from the data processing system 4 to the steering wheel 2, in particular an actuator, such as an electric motor, thereof, for moving the steering wheel 2. The signal S3 may be or comprise the second data.

Consequently, or at the same time, the method 10 may comprise a step 13 of obtaining third data for autonomously steering the vehicle 1 by the steer-by-wire system 7 during the autonomous driving operation, in particular steering, the third data being based on the first data. Hence, the first data may be seen as data indicating the autonomous driving operation as a prediction or planned operation, for example, whereas the third data may be the data being used for the autonomous steering, and which may be transmitted with or as signal S2 as shown in Fig. 1, for example.

Moreover, the method 10 may comprise a step 14 of executing control data for moving the steering wheel 2 before and/or during the autonomous driving operation that is being carried out based on the third data, wherein the control data is the second data or is based on the second data. For example, the control data may be a control instruction for the actuator of the steering wheel 2 and based on the second data from the data processing system 4.

Figure 2 schematically illustrates an exemplary movement pattern MP of the steering wheel 2 based on the second data. In this example, the movement pattern MP starts from the initial or nominal position P1 of the steering wheel 2 as illustrated in Fig. 1 and moves in the movement direction D as indicated in Fig. 2, namely towards the right and to a second position P2. Consequently, the movement pattern MP is repetitive between the second position P2 and a third position P3, both being movement positions, of the steering wheel 2, which is being moved in a repetitive manner according to the movement pattern MP. For example, by means of such repetitive movement pattern MP or, in other words, nudging, a turn of the vehicle 1 may be indicated to the occupants of the vehicle 1 to prepare them for the turn and/or guide them through the turn to increase their comfort as they may anticipate the autonomous driving operation.

Alternative movement patterns MP are also possible. For example, following a static offset approach, the movement pattern MP may be a movement from the position P1 to position P2, at which the steering wheel 2 may be held in position during the time that the turning operation is performed or until the turning operation ends. Alternatively, for example, a repetitive movement pattern MP may be performed between positions P1 and P2, for example. Moreover, other movement patterns MP may be used to indicate other autonomous driving operations than steering, e.g., a repetitive movement of the steering wheel 2 towards the left and the right for a braking, acceleration, or similar.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of', in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]".

Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

Any designation of methods, steps and elements as first, second, etc. or similar as provided herein is merely intended to make the methods, their steps and elements referenceable and distinguishable from one another. By no means does the designation of methods, steps and elements constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the examples of the disclosure described herein are capable of operation in other sequences than described or illustrated herein.

In the context of the present disclosure any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of ± 5% is also indicated by the terms "about" and "approximately" used herein with respect to a numerical value.

Any reference signs in the claims should not be construed as limiting the scope of the claims.

### LIST OF REFERENCE SIGNS

- 1: vehicle
- 2: steering device, steering wheel
- 3: steering gear
- 4: data processing system
- 5: processing unit
- 6: computer program product
- 7: steer-by-wire system
- 10: method
- 11, 12, 13, 14: steps
- P1, P2, P3: positions
- S1, S2, S3: signals
- D: movement direction
- MP: movement pattern

## Claims

1. A method (10) for moving a steering device (2) of a vehicle (1), the vehicle (1) comprising a steer-by-wire system (7) for steering the vehicle (1), and the method (10) comprising:
- obtaining first data indicative of an autonomous driving operation to be carried out by the vehicle (1); and
- obtaining second data indicative of a movement pattern (MP) for moving the steering device (2) based on the first data.

2. The method (10) of claim 1, wherein the vehicle (1) comprises
a first mode, in which movement of the steering device (2) is being used as input for the steer-by-wire system (7) to steer the vehicle (1), and
a second mode for carrying out the autonomous driving operation,
wherein the second data is obtained for steering the steering device (2) in the second mode of the vehicle (1).

3. The method (10) of claim 1 or 2, wherein the method (10) further comprises:
- obtaining third data for autonomously steering the vehicle (1) by the steer-by-wire system (7) during the autonomous driving operation, the third data being based on the first data.

4. The method (10) of any one of the previous claims, wherein the movement pattern (MP) is different from a movement action required for moving the steering device (2) to carry out the autonomous driving operation indicated by the first data.

5. The method (10) of any one of the previous claims, wherein the method (10) further comprises:
- executing control data for moving the steering device (2) before and/or during the autonomous driving operation is being carried out by the vehicle (1).

6. The method (10) of any one of the previous claims, wherein the movement pattern (MP) comprises one or more movement dimensions being at least one of: a movement angle, a movement direction, a movement position, and a movement speed.

7. The method (10) of any one of the previous claims, wherein the movement pattern (MP) is a repetitive movement of the steering device (2) between at least two movement positions (P2, P3).

8. The method (10) of any one of the previous claims, wherein the second data is obtained such that the movement pattern (MP) correlates to a type of the autonomous driving operation indicated by the first data.

9. The method (10) of claim 8, wherein the type of the autonomous driving operation is at least one of: a left steering operation and a right steering operation,
wherein at least a movement direction (D) of the movement pattern (MP) correlates to the left steering operation or the right steering operation.

10. The method (10) of any one of the previous claims, wherein the second data is obtained such that the movement pattern (MP) correlates to an extent of the autonomous driving operation indicated by the first data.

11. The method (10) of any one of the previous claims, wherein the method (10) further comprises:
- obtaining fourth data indicative of a driving awareness and/or driving readiness of an occupant of the vehicle (1);
wherein the second data is obtained such that the movement pattern (MP) correlates to the fourth data.

12. The method (10) of any one of the previous claims, wherein the second data is further based on one or more user settings.

13. A computer program product (6) comprising instructions which, when executed by a data processing system (4), cause the data processing system (4) to carry out the method (10) of any one of the previous claims.

14. A data processing system (4) comprising means for carrying out the method (10) of any one of claims 1 to 12.

15. A vehicle (1) comprising a steering device (2), a steer-by-wire system (7) for steering the vehicle (1), and the data processing system (4) of claim 14.
